# EUROPÄISCHE PATENTSCHRIFT

(11) **EP 0 699 881 B1**
(45) Veröffentlichungstag und Bekanntmachung des Hinweises auf die Patenterteilung: **13.01.1999**
(21) Anmeldenummer: 95116849.1
(22) Anmeldetag: 25.06.1993
(51) Int. Cl.: F25B 9/02

(54) **Kühlsystem zum Abkühlen eines Kühlobjektes auf tiefe Temperaturen mittels eines Joule-Thomson-Kühlers**
Refrigeration system for cooling down an object to low temperatures by a Joule-Thomson cooler
Système frigorifique pour le refroidissement d'un objet à des basses températures par un refroidisseur Joule-Thomson

(30) Priorität: 13.08.1992 DE 4226820
(43) Veröffentlichungstag der Anmeldung: 06.03.1996
(62) Teilanmeldung aus: 93110156.2
(73) Patentinhaber: Bodenseewerk Gerätetechnik GmbH, 88662 Überlingen (DE)
(72) Erfinder: Hipper, Roland, D-88662 Überlingen (DE); Reischmann, Hans-Ludwig, D-88662 Überlingen (DE); Rid, Robert, D-88677 Markdorf (DE)
(74) Vertreter: Weisse, Jürgen, Dipl.-Phys. Patentanwalt

(56) Entgegenhaltungen:
- EP-A- 0 098 646
- EP-A- 0 245 164
- GB-A- 1 238 470
- GB-A- 2 193 799
- US-A- 4 766 740
- PATENT ABSTRACTS OF JAPAN vol. 10, no. 167 (M-488), 13.Juni 1986 & JP-A-61 017788 (MATSUSHITA DENKI SANGYO), 25.Januar 1986,
- PATENT ABSTRACTS OF JAPAN vol. 7, no. 199 (M-240), 3.September 1983 & JP-A-58 099575 (SHARP), 13.Juni 1983,
- PATENT ABSTRACTS OF JAPAN vol. 6, no. 89 (M-132), 27.Mai 1982 & JP-A-57 025573 (FUJI KOKI SEISAKUSHO), 10.Februar 1982,
- PATENT ABSTRACTS OF JAPAN vol. 11, no. 69 (C-407), 3.März 1987 & JP-A-61 227141 (FURUKAWA ELECTRIC), 9.Oktober 1986,

## Beschreibung

### Technisches Gebiet

Die Erfindung betrifft Kühlsystem zum Abkühlen eines Kühlobjektes auf tiefe Temperaturen mittels eines Joule-Thomson-Kühlers mit einer Expansionsdüse, bei welchem ein elektrischer Temperatursensor vorgesehen ist, der unmittelbar auf die Temperatur des Kühlobjektes anspricht und bei welchem der Durchfluß durch die Expansionsdüse mittels eines Drosselkörpers regelbar ist, der von einem Stellglied temperaturabhängig verstellbar ist, das von dem elektrischen Temperatursensor steuerbar ist im Sinne einer Erhöhung des Durchflusses bei Erhöhung der Temperatur des Kühlobjektes über einen Sollwert hinaus.

### Zugrundeliegender Stand der Technik

Durch die GB-A-1 238 470 ist ein Joule-Thomson-Kühler mit einer Expansionsdüse bekannt, bei welchem der Durchfluß durch die Expansionsdüse mittels eines Drosselkörpers regelbar ist. Der Drosselkörper ist von einem Stellglied temperaturabhängig verstellbar. Das Stellglied besteht aus einer Betätigungsstange und einem Balgen. Der Drosselkörper ist an der Betätigungsstange befestigt. Die Temperatur des Kühlobjektes wird von einem thermo-elektrischen Temperatursensor gemessen. Das Stellglied ist von diesem Temperatursensor über einen Vorverstärker und einen Regler steuerbar, der über ein elektro-pneumatisches Ventil den Druck auf der Außenseite des Balgens beeinflußt. Dadurch wird die effektive Öffnungfläche der Expansionsdüse verändert und damit auch den Durchfluß des Kühlmittels.

Die EP-A-0 245 164 beschreibt einen Joule-Thomson-Kühler mit Expansionsdüse und einem mit einem Stellglied verbundenen Verschlußelement. Um das Abkühlen zu beschleunigen soll ein über einen großen Temperaturbereich hinweg stattfindendes, kontinuerliches Schließen der Expansionsdüse vermieden werden. Zu diesem Zweck ist das Stellglied so ausgelegt, daß es das Verschlußelement bei einer bestimmten Temperatur schlagartig von einer ersten in eine zweite Position bewegt. In der ersten Position läßt das Verschlußelement die Öffnung der Expansionsdüse völlig frei. In der zweiten Position schließt das Verschlußelement die Öffnung der Expansionsdüse teilweise und läßt am Rand der Öffnung einen kleinen Leckdurchgang offen.

In einem Ausführungsbeispiel der EP-A-0 245 164 endet die Expansionsdüse an einem Seitenwand einer Bohrung. In dieser Bohrung befindet sich das zylinderförmig ausgebildete, in der Bohrung drehbare Verschlußelement. Das Verschlußelement besitzt eine schräg verlaufende Einkerbung. Wenn die Öffnung der Expansionsdüse mit dieser Einkerbung fluchtet, ist sie offen, sonst geschlossen. Das Verschlußelement wird von dem Stellglied in Abhängigkeit von der Temperatur gedreht. In einer Ausführung besteht das Stellglied aus einem Bimetallstreifen aus zwei an einander angebrachten Platten, nämlich eine dünne, in Ruhestellung schraubenförmig tordierte Platte aus einer Legierung mit hohem Widerstand und eine etwas dickere Platte aus einer Legierung mit Formgedächtnis-Eigenschaften. Oberhalb einer gewissen Transformationstemperatur ist die dickere Platte plastisch und hält den Bimetallsteifen in einer planen Form. Bei der Transformationstemperatur wird die dickere Platte schlagartig elastisch, so daß der Bimetallstreifen die schraubenförmige Form der dünneren Platte annimmt. Diese Umwandlung ist mit einer Hysterese behaftet. Auf dieser Weise wird das Verschlußelement beim Erreichen der Transformationstemperatur schlagartig verdreht und schließt die Öffnung der Expansionsdüse. Die Kühlleistung sinkt dadurch und der Bimetallstreifen wird wieder wärmer. Auf Grund der Formgedächtnis-Eigenschaft der dickeren Platte nimmt der Bimetallstreifen bei einer bezüglich der Transformationstemperatur um die Hysterese verschobene Temperatur nun wieder die plane Form an.

Durch die JP-A-61 017788 (Patent Abstracts of Japan, vol. 10, no. 167) ist ein Expansionsventil bekannt, bei welchem eine Ventilöffnung durch ein Ventilschließglied geöffnet und geschlossen wird. Das Ventilschließglied ist mit einem Formgedächtniselement in Form einer Platte verbunden, durch welche ein elektrischer Strom geleitet werden kann. Wenn kein Strom durch die Platte fließt, ist sie konvex gebogen und das Ventilschließglied ist in einer Offenstellung. Wenn ein Strom durch die Platte fließt, wird die Platte flach und das Ventilschließglied befindet sich dann in einer Schließstellung.

### Offenbarung der Erfindung

Nach dem kennzeichnenden Teil des Anspruchs 1 weist das Stellglied ein nach Maßgabe eines Stellsignals des Temperatursensors beheizbares Formgedächtniselement auf, welches von einem Draht gebildet ist, der sich innerhalb des Joule-Thomson-Kühlers erstreckt.

Ausgestaltungen der Erfindung sind Gegenstand der unabhängigen Ansprüche.

### Kurze Beschreibung der Zeichnungen

Ein Ausführungsbeispiel der Erfindung ist nachstehend unter Bezugnahme auf die zugehörigen Zeichnungen näher erläutert.
- Fig.1: zeigt einen Längsschnitt eines mit einem Joule-Thomson-Kühler arbeitenden, geregelten Kühlsystems, bei welchem als Stellglied ein beheizbares Formgedächtniselement dient.
- Fig.2: zeigt die Temperatur-Weg-Kennlinie des Formgedächtniselements für Erwärmung und Abkühlung.
- Fig.3: veranschaulicht das Regelprinzip für die Temperatur des Kühlobjekts in der Temperatur-Weg-Kennlinie des als Stellglied dienenden Formgedächtniselements.

### Bevorzugte Ausführung der Erfindung

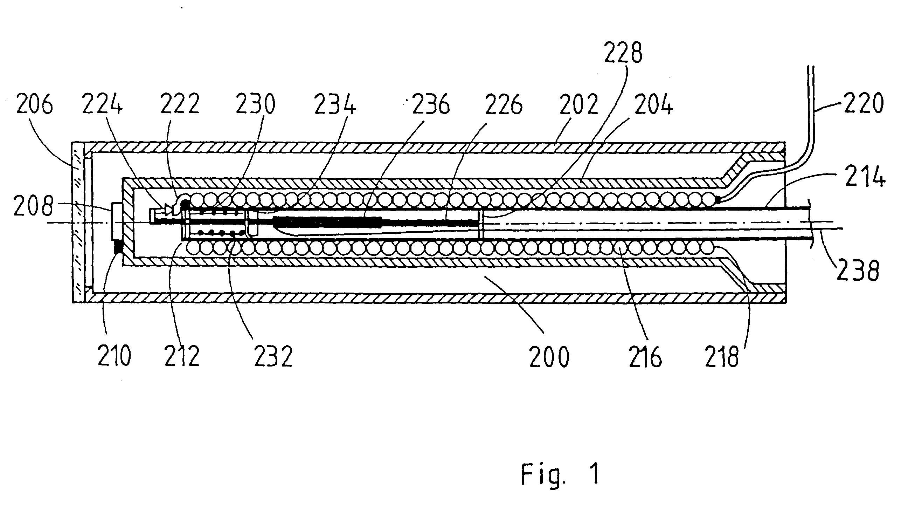

In Fig.1 ist mit 200 ein Dewar-Gefäß bezeichnet. Das Dewar-Gefäß 200 weist einen Außenteil 202 und einen dazu koaxialen Innenteil 204 auf. Außen- und Innenteil 202 bzw. 204 sind topfförmig und an ihren offenen Enden miteinander verbunden. Der Außenteil 202 bildet an seiner geschlossenen Stirnseite ein Fenster 206. Auf der Stirnseite des Innenteils 204 sitzt ein Kühlobjekt in Form eines infrarotempfindlichen Detektors 208. An dem Detektor 208 sitzt ein Temperaturfühler 210.

In dem Dewar-Gefäß 200 sitzt ein Joule-Thomson-Kühler 212. Auf einem koaxial in den Innenteil 204 ragenden, dünnwandigen Rohr 214 ist eine Druckgasleitung 216 wendelförmig aufgewickelt. Die Druckgasleitung 216 ist mit Wärmeaustauscher-Rippen 218 versehen. Auf die Druckgasleitung wird über einen Druckgas-Anschluß 220 ein Druckgas geleitet. Detektorseitig endet die Druckgasleitung in einer Entspannungsdüse 222. Der Austrittsquerschnitt der Entspannungsdüse 222 ist durch einen Drosselkörper 224 veränderbar.

Der Drosselkörper 224 sitzt an einem Zugglied 226. Das Zugglied 226 ist an seiner dem Drosselkörper 224 abgewandten Ende über Stege 228 mit dem Rohr 214 verbunden. An dem drosselkörperseitigen Ende des Zuggliedes 226 ist ein Teller 230 angebracht. An dem Teller 230 liegt eine Druckfeder 232 an. Die Druckfeder 232 ist eine Wendelfeder, die koaxial zu dem Zugglied 226 angeordnet ist. Die Druckfeder 232 stützt sich an einem Federwiderlager 234 ab. Das Federwiderlager 234 sitzt in dem Rohr 214. Das Zugglied 226 ist zentral durch das Federwiderlager 234 hindurchgeführt. Auf diese Weise ist das Zugglied 226 durch die Druckfeder 232 gespannt. Die Druckfeder 232 sucht den Drosselkörper 224 in seine Offenstellung zu drücken.

In das Zugglied 226 ist ein Abschnitt eingeschaltet, der von einem Formgedächtniselement 236 gebildet ist. Das Formgedächtniselement 236 ist dadurch beheizbar, daß über eine Leitung 238 ein Heizstrom durch das Formgedächtniselement 236 hindurchgeleitet wird.

Formgedächtniselemente sind Körper, die in Abhängigkeit von ihrer Kristallstruktur (Austenit oder Martensit) ihre Abmessungen, also z.B. ihre Länge, zwischen einem ersten und einem zweiten Wert ändern. Die Umwandlung der Kristallstrukturen erfolgt in Abhängigkeit von der Temperatur. Zwischen den beiden Endzuständen, in denen der Körper entweder nur die eine oder nur die andere Kristallstruktur aufweist, ändern sich die Abmessungen des Körpers sehr stark mit der Temperatur. Es können innerhalb eines Temperaturbereiches, in welchem die Umwandlung zwischen den Kristallstrukturen stattfindet, Längenänderungen bis zu 3% auftreten. Das ist um Größenordnungen mehr als die normale thermische Ausdehnung eines Körpers.

Solche Formgedächtniselemente sind bekannt und handelsüblich erhältlich. Es handelt sich um Metall-Legierungen, beispielsweise NiTi, CuZnAl oder CuAlNi.

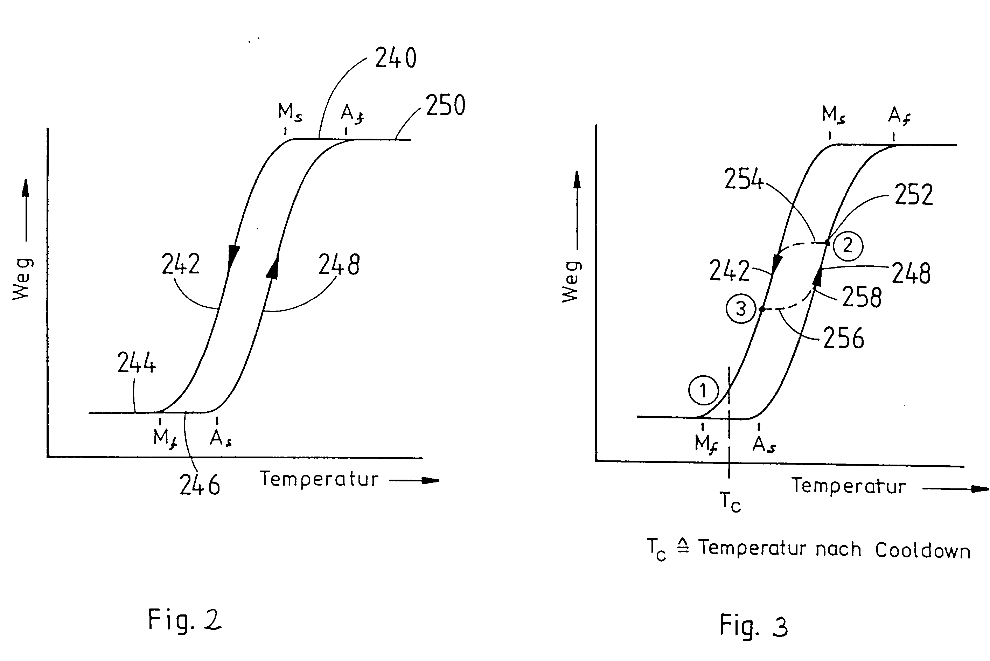

Das Verhalten eines solchen Formgedächtniselements ist in Fig.2 schematisch dargestellt. Fig.2 ist ein Formänderungs-Diagramm eines Formgedächtniselements. Die Abszisse ist die Temperatur in K, die Ordinate ist die Längenänderung. Bei Abkühlung bleibt die Länge des Formgedächtniselements zunächst auf einem im wesentlichen konstanten Wert, der durch den horizontalen Kurvenverlauf 240 dargestellt ist. In einem Punkt Mₛ beginnt eine Umwandlung der Kristallstruktur des Formgedächtniselements, die mit einer starken Verringerung der Länge des Formgedächtniselements verbunden ist. Das ist durch den zu niedrigeren Temperaturen hin abfallenden Kurvenverlauf 242 dargestellt. Im Punkt M_{f} weist das Formgedächtniselement durchgehend die andere Kristallstruktur auf. Bei weiterer Abkühlung bleibt die Länge des Formgedächtniselements dann wieder im wesentlichen konstant. Das ist durch den waagerechten Kurvenverlauf 244 dargestellt. Wird die Temperatur des Formgedächtniselements wieder über den Punkt M_{f} hinaus erhöht, dann behält das Formgedächtniselement zunächst die den tieferen Temperaturen zugeordnete Kristallstruktur. Die Länge bleibt bis zu einem Punkt Aₛ weiter im wesentlichen konstant. Das ist durch den waagerechten Kurvenverlauf 246 dargestellt. Im Punkt Aₛ beginnt eine Umwandlung in die den höheren Temperaturen zugeordnete Kristallstruktur. Die Länge des Formgedächtniselements steigt mit ansteigender Temperatur wieder bis zu einem Punkt A_{f} an. Das ergibt den Kurvenverlauf 248 in Fig.2. Der Kurvenverlauf 248 ist im wesentlichen parallel zu dem Kurvenverlauf 242. Die Länge des Formgedächtniselements bleibt dann bei Temperaturen oberhalb von A_{f} wieder im wesentlichen konstant. Das ist durch den Kurvenverlauf 250 dargestellt.

Das Formgedächtniselement 236 ist bei der Kühlsystem von Fig.1 so bemessen, daß bei höheren Temperaturen das Drosselglied 224 von der Druckfeder 224 in seine voll geöffnete Stellung gedrückt wird. Das Formgedächtniselement weist dann die Kristallstruktur entsprechend dem Kurvenverlauf 250 von Fig.2 auf. Es wird daher bei voll geöffneter Entspannungsdüse 222 eine maximale Abkühlungsrate erreicht. Die Temperatur des Detektors 208 wird schnell erniedrigt. Die Länge des Formgedächtniselements 236 wird dabei zunächst nur unwesentlich entsprechend der üblichen thermischen Dilatation verkürzt. Das Formgedächtniselement 236 ist so gewählt, daß die Temperatur, auf welche der Detektor 208 abgekühlt werden soll, in dem Bereich liegt, in welchem der mit einer starken Verkürzung des Formgedächtniselements verbundene Übergang von der einen Kristallstruktur zur anderen erfolgt.

Bei der so erzielten Abkühlung des Detektors 208 wird auch das Formgedächtniselement 236 durch das zurückströmende, entspannte Gas abgekühlt. Dadurch verkürzt sich das Formgedächtniselement 236. Das Drosselglied 224 wird entgegen der Wirkung der Druckfeder 232 nach rechts in Fig.1 gezogen und drosselt die Entspannungsdüse 222. Damit wird die Kühlwirkung vermindert. Es stellt sich nach dem "Cooldown" eine Temperatur T_{c} ein, wie sie in Fig.3 dargestellt ist.

In einem Ausführungsbeispiel ist bei Temperaturen über 170 K das Formgedächtniselement 236 voll ausgedehnt. Das Formgedächtniselement 236 befindet sich dann im Punkt A_{f} von Fig.3. Nach dem Cooldown stellt sich am Sensor 210 eine Temperatur T_{c} von zwischen 90 und 120 K ein. Das Formgedächtniselement 236 befindet sich dann im Bereich des horizontalen Kurvenverlaufs zwischen den Punkten M_{f} und Aₛ.

Es erfolgt nun eine Regelung der von dem Temperaturfühler 210 gemessenen Temperatur des Detektors 208. Eine Solltemperatur liegt in der Mitte des durch die abfallenden und ansteigenden Kurvenverläufe 242 und 248 bestimmten Arbeitsbereiches zwischen den Punkten M_{f} und A_{f}.

Nach Erreichen der Temperatur T_{c} wird das Formgedächtniselement 236 durch Hindurchleiten von elektrischem Strom beheizt. Der Zustand des Formgedächtniselements 236 bewegt sich dann auf dem Kurvenverlauf 248 zwischen den Punkten Aₛ und A_{f}. Dadurch wird die Entspannungsdüse 222 weiter geöffnet. Die Temperatur am Detektor 208 sinkt, bis im Punkt 252 am Detektor 208 die Siedetemperatur des expandierenden Gases erreicht wird. (Das ist nicht die in Fig.3 dem Punkt 252 zugeordnete Temperatur des Formgedächtniselements). Dann erfolgt keine weitere Abkühlung des Sensors.

Danach wird der Heizstrom durch das Formgedächtniselement 236 abgeschaltet. Es erfolgt eine Abkühlung des Formgedächtniselements 236 längs des gestrichelt in Fig.3 dargestellten Kurvenverlaufs 254, wobei die Länge des Formgedächtniselements 236 und damit die Temperatur des Detektors 208 im wesentlichen konstant bleibt. Bei weiterer Abkühlung folgt der Zustand des Formgedächtniselements 236 dem Kurvenverlauf 242. Das Formgedächtniselement 236 verkürzt sich. Dadurch wird die Entspannungsdüse 222 stärker gedrosselt. Das bewirkt schließlich eine Erhöhung der am Detektor 208 durch den Temperaturfühler 210 gemessenen Temperatur. Der Regler schaltet den Heizstrom wieder ein. Die Temperatur des Formgedächtniselements 236 erhöht sich. Hierdurch folgt der Zustand des Formgedächtniselements 236 dem gestrichelt dargestellten Kurvenverlauf 256. Dabei bleibt die Länge des Formgedächtniselements 236 wieder im wesentlichen unverändert, bis im Punkt 258 wieder der Kurvenverlauf 248 erreicht ist und die Länge des Formgedächtniselements 236 sich zu dem Punkt 252 hin wieder vergrößert.

Bei dieser Art der Regelung sind die Temperaturschwankungen nur durch die Schalthysterese des Reglers bestimmt. Die Hysterese des Formgedächtniselements spielt keine Rolle.

Bei der Ausführung nach Fig.1 wird das aktive Stellelement sehr einfach. Das aktive Stellelement besteht nur aus einem über eine Feder vorgespannten Draht mit dem Formgedächtniselement, das ebenfalls von einem Drahtstück gebildet ist. Das Stellelement ist in der Lage, relativ große Stellkräfte von mehr als 2N bei einer Drahtstärke des Formgedächtniselements 236 von 0,2 mm Drahtstärke auszuüben. Bei einer Länge des Formgedächtniselements von 10 mm kann ein Stellhub von mehr als 100 µm erreicht werden. Der Arbeitsbereich kann in weiten Grenzen gewählt werden.

## Patentansprüche

1. Kühlsystem zum Abkühlen eines Kühlobjektes (208) auf tiefe Temperaturen mittels eines Joule-Thomson-Kühlers (212) mit einer Expansionsdüse (222), bei welchem ein elektrischer Temperatursensor (210) vorgesehen ist, der unmittelbar auf die Temperatur des Kühlobjektes (208) anspricht und bei welchem der Durchfluß durch die Expansionsdüse (222) mittels eines Drosselkörpers (224) regelbar ist, der von einem Stellglied temperaturabhängig verstellbar ist, das von dem elektrischen Temperatursensor (210) steuerbar ist im Sinne einer Erhöhung des Durchflusses bei Erhöhung der Temperatur des Kühlobjektes (208) über einen Sollwert hinaus, **dadurch gekennzeichnet,** daß das Stellglied ein nach Maßgabe eines Stellsignals des Temperatursensors (210) beheizbares Formgedächtniselement (236) aufweist, welches von einem Draht gebildet ist, der sich innerhalb des Joule-Thomson-Kühlers erstreckt.

2. Kühlsystem nach Anspruch 1, **dadurch gekennzeichnet,** daß
(a) das Stellglied ein Zugglied (226) aufweist, der sich längs des Joule-Thomson-Kühlers erstreckt, an seinem detektorseitigen Ende den Drosselkörper (224) trägt und durch eine Druckfeder (232) in Öffnungsrichtung des Drosselkörpers (224) vorgespannt ist, und
(b) das Formgedächtniselement (236) einen Teil des Zugglieds (226) bildet.

3. Kühlsystem nach Anspruch 1 oder 2, **dadurch gekennzeichnet,** daß zum Beheizen des Formgedächtniselements (236) ein Heizstrom unmittelbar durch das Formgedächtniselement (236) hindurchleitbar ist.

## Claims

1. Cooling system for cooling an object to be cooled (208) down to deep temperatures by means of a Joule-Thomson cooler (212) having an expansion nozzle (222), wherein an electrical temperature sensor (210) is provided, which directly responds to the temperature of the object to be cooled (208), and wherein the through-flow through the expansion nozzle (222) is controlled by means of a restrictor body (224), which is adjustable by an actuator as a function of temperature, the actuator being arranged to be controlled by the electrical temperature sensor to increase the through-flow, if the temperature of the object to be cooled (208) is increased beyond a set point, **characterized in that** the actuator comprises a shape-memory element (236) arranged to be heated in accordance with an control signal from the temperature sensor (210), the shape-memory element being a wire which extends within the Joule-Thomson cooler.

2. Cooling system as claimed in claim 1, **characterized in that**
(a) the actuator comprises a tension element (226), which extends longitudinallly in the Joule-Thomson cooler, has the restrictor body (224) at its detector-side end and is biased in opening direction of the restrictor body by a compression spring (232), and
(b) the shape-memory element (236) is part of the tension element (226).

3. Cooling system as claimed in claim 1 or 2, **characterized in that,** for heating the shape-memory element (236), a heating current is directly passed through the shape-memory element (236).

## Revendications

1. Système de refroidissement destiné à refroidir un objet à refroidir (208) à de basses températures à l'aide d'un refroidisseur de Thomson et Joule (212) muni d'une tuyère d'expansion (222) pour lequel il est prévu un capteur de température électrique (210) répondant directement à la température de l'objet à refroidir (208) et pour lequel la circulation dans la tuyère d'expansion (222) est susceptible d'être réglée à l'aide d'un dispositif d'étranglement (224) susceptible d'être déplacé en fonction de la température par un membre d'ajustage qui est susceptible d'être commandé par le capteur de température électrique (210) en vue d'une augmentation de la circulation lorsque la température de l'objet à refroidir (208) augmente au-delà d'une valeur de consigne, **caractérisé par le fait que** le membre d'ajustage présente un élément à effet de mémoire des formes (236) susceptible d'être chauffé selon un signal d'ajustage du palpeur de température (210), élément formé par un fil métallique s'étendant à l'intérieur du refroidisseur de Thomson et Joule.

2. Système de refroidissement selon la revendication 1,
**caractérisé par le fait que**
(a) le membre d'ajustage présente un membre de traction (226) qui s'étend le long du refroidisseur de Thomson et Joule, qui porte le dispositif d'étranglement (224) à son extrémité située du côté du détecteur et qui est prétendu par un ressort de compression (232) dans le sens de l'ouverture du dispositif d'étranglement (224), et
(b) l'élément à effet de mémoire des formes (236) forme une partie du membre de traction (226).

3. Système de refroidissement selon la revendication 1 ou 2, **caractérisé par le fait qu**'un courant chauffant est susceptible d'être introduit directement à travers l'élément à effet de mémoire des formes (236) afin de chauffer l'élément à effet de mémoire des formes (236).
